# EUROPÄISCHE PATENTANMELDUNG

(11) **EP 1 967 400 A2**
(43) Veröffentlichungstag der Anmeldung: **10.09.2008**
(21) Anmeldenummer: 08002904.4
(22) Anmeldetag: 16.02.2008
(51) Int. Cl.: B60J 1/20

(54) **Rollo mit Lochbandantrieb**

(30) Priorität: 07.03.2007 DE 102007011465
(71) Anmelder: BOS GmbH & Co. KG, 73760 Ostfildern (DE)
(72) Erfinder: Walter, Herbert, 73061 Ebersbach (DE)
(74) Vertreter: Rüger, Barthelt & Abel Patentanwälte

(57) **Zusammenfassung**

Eine Antriebsanordnung (32,33) für Fensterrollos (21,25) von Kraftfahrzeugen weist ein Gehäuse (55) auf, das eine Kammer zur Unterbringung eines Federstahlbandes (45) enthält, das, ähnlich einer Uhrwerksfeder, spiralförmig vorgeformt ist. Das Federstahlband ist in Längsrichtung äquidistant gelocht und läuft nach dem Verlassen der Kammer über einen durch einen Getriebemotor (50) angetriebenes Antriebszahnrad (42), das nach Art eines Stacheldrahts ausgebildet ist, dessen Fortsätze (54) in die Löcher (48) des Federstahlbands eingreifen. Mit Hilfe des Federstahlbands kann eine Zug- oder Druckkraft zum Bewegen der Rollobahn erzeugt werden.

## Beschreibung

Fernbetätigte Fensterrollos in Kraftfahrzeugen benötigen einen motorischen Antrieb. Da die Rollobahn aus einem biegeschlaffen Material besteht, kann sie nicht geschoben werden, weshalb die von der Wickelwelle abliegende Kante der Rollobahn in irgendeiner Weise von der Wickelwelle weg bewegt werden muss.

Bekannte Anordnungen aus dem Stand der Technik sehen deswegen vor, die Wickelwelle des Rollos mit einem Federmotor im Aufwickelsinne der Rollobahn vorzuspannen. Um die Rollobahn vor dem Fenster auszubreiten, ist die Rollobahn mit einem Zugstab versehen, der endseitig in Führungsschienen geführt ist. Die Führungsschienen dienen gleichzeitig dazu, ausknicksicher rundumverzahnte Zahnstangen zu führen. Die Zahnstangen kämmen mit einem entsprechenden Zahnrad eines Getriebemotors und sind so in der Lage den Zugstab gegen die Wirkung des Federmotors von der Wickelwelle weg zu bewegen.

Die rundumverzahnten Zahnstangen sind in allen Richtungen relativ biegesteif, weshalb das Leertrum der Zahnstange in einem speziellen Speicherrohr geführt werden muss. Das Verlegen des Speicherrohrs in der Fahrzeugkarosserie unterhalb des Heckfensters, im Dach oder in den Türen bedeutet einen erheblichen Montageaufwand.

Ausgehend hiervon ist es Aufgabe der Erfindung, eine Antriebsanordnung für Fensterrollos von Kraftfahrzeugen zu schaffen, die sehr kompakt ist.

Diese Aufgabe wird erfindungsgemäß mit einer Antriebsanordnungen mit den Merkmalen des Anspruches 1 gelöst.

Gemäß der Erfindung gehört zu der Antriebsanordnung ein Federstahlband, das über die Länge äquidistant gelocht ist. Das Federstahlband ist so vorgeformt, dass es im entspannten Zustand eine Bandspirale bildet. Aus Platzgründen liegen die Windungen der so erhaltenen Bandfeder flach aufeinander. Das funktionslose Ende des Federstahlbands befindet sich im Inneren der Spirale, während dasjenige Ende, das zum Antrieb der Rollobahn eingesetzt wird, außen auf der Spirale liegt.

Zum Bewegen des Federstahlbands weist die erfindungsgemäße Antriebsanordnung ein Antriebszahnrad auf, das auf seinem Außenumfang mit einer Anzahl von Fortsätzen versehen ist, die zum formschlüssigen Eingreifen in die Lochung des Federstahlbands vorgesehen ist. Es ähnelt einem Stachelrad. Das Antriebszahnrad wird mit Hilfe eines Getriebemotors augetrieben, auf dessen Ausgangswelle das Antriebszahnrad sitzt. Außerdem sind Maßnahmen vorgesehen, um das Federstahlband mit dem Antriebszahnrad in Eingriff zu halten.

Aufgrund dieser erfindungsgemäßen Gestaltung ist das Leertrum des Federstahlbands, das zum Bewegen der Rollobahn verwendet wird, spiralförmig aufgewickelt und kann damit platzsparend untergebracht werden. Es genügt eine kleine Kammer, die unmittelbar in der Nähe des Getriebegehäuses des Antriebsmotors vorhanden ist, um das Leertrum aufzunehmen. Damit sind die zusätzlichen Montageschritte, die beim Stand der Technik zum Verlegen der Leerrohre erforderlich sind, entbehrlich.

Da das Federstahlband aufgrund seiner vorgeformten Gestalt von sich aus bestrebt ist, die Spirale zu bilden, liegt diese Spirale weitgehend frei, d.h. mit Spiel in der zugehörigen Kammer. Beim Zurückschieben vom Lochband in die Kammer sorgt die in dem Federstahlband vorhandene Biegekraft zwangläufig dazu, eine spiralförmigen Wickel zu bilden und somit die Spirale durch radiales Wachstum zu ergänzen.

Wäre das Lochband nicht spiralförmig vorgebogen, müsste die Kraft zum Bilden der Spirale aus der Schubkraft abgeleitet werden, mit der das Lochband in die Kammer zurückgeschoben wird. Dies würde alsbald dazu führen, dass sich die Spirale im Gehäuse verklemmt. Wegen der spiralförmigen Verformung des Federstahlbands wird ein solcher selbsthemmender Effekt wirksam vermieden.

Um mit Hilfe des Federstahlbands ausknicksicher größere Schubkräfte erzeugen zu können, ist es von Vorteil, wenn das Federstahlband bezüglich der Längsachse gekrümmt ist. Dabei liegt die Krümmungsachse zweckmäßigerweise auf der Seite des spiralförmigen Wickels.

Die erfindungsgemäße Anordnung kann sowohl ziehend als auch schiebend bzw. drückend auf die freie Kante der Rollobahn einwirken.

Dabei können Führungsmittel vorgesehen sein, um das Federstahlband bei Druckbelastung ausknicksicher zu führen. Auch bei Zugbelastung sind Führungsmittel zweckmäßig, die dem Arbeitstrum des Federstahlbands einen weitgehend gestreckten Verlauf aufzwingen.

Zu den Führungsmitteln kann eine Führungsschiene gehören. Diese Führungsschiene kann hinterschneidungsfrei sein, wobei eine Schmalseite des Federstahlbandes in Richtung auf den Nutenschlitz zeigt.

Die Führungsschiene kann auch eine hinterschnittene Führungsnut enthalten, wobei dann eine Flachseite des Federstahlbands in Richtung auf den Nutenschlitz zeigt.

Das Federstahlband kann entweder unmittelbar mit der Rollobahn gekuppelt sein oder über ein Seil.

Die Antriebsanordnung kann ein Gehäuse aufweisen, an dem der Getriebemotor befestigt ist und das die Mittel enthält, um das Federstahlband mit dem Antriebszahnrad in Eingriff zu halten.

Die Mittel, um das Federstahlband mit dem Antriebszahnrad in Eingriff zu halten, ist im einfachsten Falle ein Kanal, der über einen bestimmten Umschlingungswinkel um das Antriebszahnrad herumführt und wobei eine Wand des Kanals von der Außenumfangsfläche des Antriebszahnrads und die andere Wand von dem Gehäuse gebildet ist. Diese Gehäusewand enthält eine Nut, durch die die Fortsätze des Antriebszahnrads laufen, wenn sie im Bereich der Umschlingung über die Rückseite des Federstahlbands überstehen.

Wenn der Umschlingungswinkel extrem klein gehalten wird, kann mit Hilfe der neuen Antriebsanordnung eine Überlastsicherung oder ein Einklemmschutz realisiert werden. Durch entsprechende Gestaltung der Andruckmittel für das Federband an dem Antriebszahnrad und der Fortsätze kann erreicht werden, dass die Fortsätze unter Zurückdrücken des Federstahlbands aus den Löchern der Lochung heraus springen, um eine Schubkraftbegrenzung und damit einen Einklemmschutz zu erreichen.

Günstige Verhältnisse können erreicht werden, wenn die Fortsätze kalottenförmig, kegelförmig oder kegelstumpfförmig gestaltet sind.

Die Höhe der Fortsätze kann das 0,8- bis das 1,5-fache der Dicke des Federstahlbands betragen.

Die neue Antriebsanordnung eignet sich für die unterschiedlichsten Arten von Fensterrollos in Kraftfahrzeugen. Zweckmäßigerweise ist dem Fensterrollo ein Zugstab zugeordnet, der an jener Kante befestigt ist, die beim Ein- und Ausfahren der Rollobahn den größten Weg zurücklegen.

Der Zugstab kann wenigstens einends oder aber beidends in Führungsschienen geführt sein, wobei der Zugstab mit der oben erläuterten Antriebsanordnung zusammenwirkt.

Die erfindungsgemäße Antriebsanordnung kann auch bei Fensterrollos eingesetzt werden, die einen oder zwei Tragstäbe aufweisen. Solche Fensterrollos werden beispielsweise an den Seitenscheiben verwendet. Der oder die Tragstäbe sind unterhalb der Fensterunterkante in Führungseinrichtungen vertikal geführt. Ihr bewegliches freies Ende ist mit dem Zugstab verbunden, so dass mit Hilfe des Tragstabs ohne weitere sonstige Führungseinrichtungen der Zugstab von der Fensterunterkante weg in Richtung auf die Fensteroberkante bewegt werden kann. Der Tragstab übernimmt dabei die erforderlichen Seitenführungskräfte und auch die Druckkraft, die von dem Zugstab auf den Tragstab ausgeübt wird.

Das Ein- und Ausfahren des Tragstabs erfolgt mit Hilfe der erfindungsgemäßen Antriebsanordnung. Diese greift hierzu an dem von dem Zugstab abliegenden Ende des Tragstabs an.

Die erfindungsgemäße Antriebsanordnung kann sowohl an jener Stelle angebracht werden, an der das ständig in der Türverkleidung bleibende Ende des Tragstabs in der ausgefahrenen Stellung des Rollos steht oder in der eingefahrenen Stellung.

Im Übrigen sind Weiterbildungen der Erfindung Gegenstand von Unteransprüchen.

Die nachfolgende Figurenbeschreibung erläutert Aspekte zum Verständnis der Erfindung, weitere nicht beschriebene Details kann der Fachmann in der gewohnten Weise den Zeichnungen entnehmen, die insoweit die Figurenbeschreibung ergänzen. Es ist klar, dass eine Reihe von Abwandlungen möglich sind.

Die nachfolgenden Zeichnungen sind nicht unbedingt maßstäblich. Zur Veranschaulichung von Details kann es sein, dass.bestimmte Bereiche übertrieben groß dargestellt sind. Darüber hinaus sind die Zeichnungen plakativ vereinfacht und enthalten nicht jedes bei der praktischen Ausführung gegebenenfalls vorhandene Detail. Die Begriffe oben und unten bzw. vorne und hinten beziehen sich auf die normale Einbaulage bzw. die Terminologie bei Kraftfahrzeugen.

In der Zeichnung sind Ausführungsbeispiele als Gegenstand der Erfindung dargestellt.
- Fig. 1: zeigt den aufgebrochenen Fondbereich eines PKW.
- Fig. 2: zeigt in einer stark schematisierten Darstellung vereinfacht das Heckscheibenrollo.
- Fig. 3: zeigt eine der beiden Antriebsanordnungen zum Betrieb des Heckscheibenrollos nach Fig. 2.
- Fig. 4: zeigt in einer stark schematisierten Form die teilweise aufgebrochene hintere rechte Seitentür unter Veranschaulichung eines Fensterrollos mit Tragstab.
- Fig. 5: zeigt in einer vereinfachten Darstellung den Antrieb des Fensterrollos.

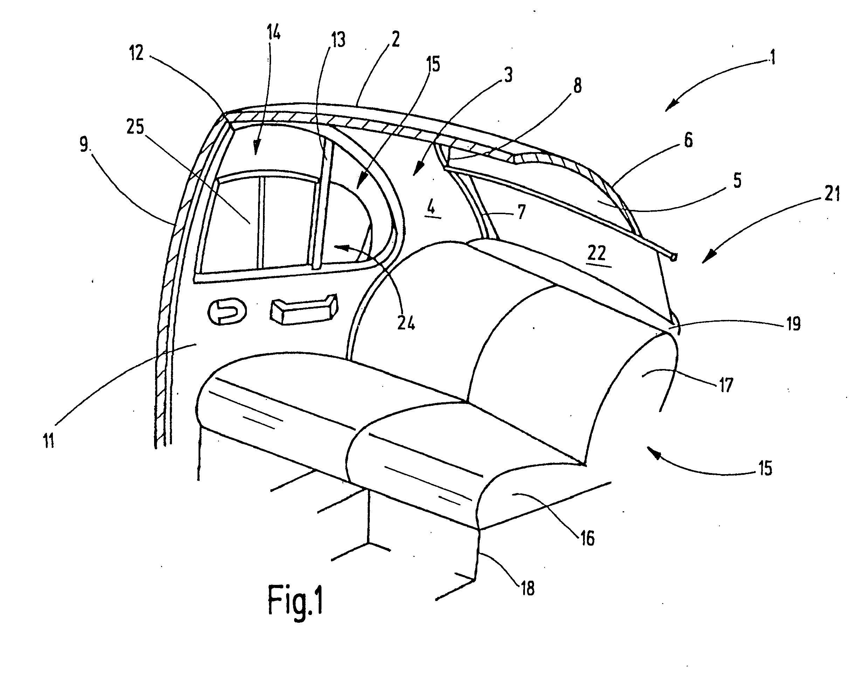

Fig. 1 stellt den aufgebrochenen abgeschnittenen Fondbereich eines PKW dar. Die Figur veranschaulicht einen Blick auf die rechte Innenseite, die zu der weggebrochenen linken Innenseite spiegelbildlich ist. Soweit nichts anderes angegeben, gelten die Erläuterungen zur rechten Karosserieseite sinngemäß auch für die linke Karosserieseite. Die Darstellung ist vereinfacht, so sind beispielsweise Karosserieinnenstrukturen, wie Versteifungen und Befestigungsmittel nicht gezeigt, da die Darstellung für das Verständnis der Erfindung nicht erforderlich ist.

Der veranschaulichte Karosserieabschnitt 1 weist ein Dach 2 auf, von dem seitlich eine C-Säule 3 nach unten zu einer nicht gezeigten Bodengruppe führt. Eine entsprechende C-Säule wäre auf der weggebrochenen Seite des Fahrzeugs zu denken. Die C-Säule 3 ist auf der Innenseite mit einer Verkleidung 4 versehen.

Das Dach 2 geht an seiner Hinterkante in ein Heckfenster 5 über, das an der Oberseite von einer Fensteroberkante 6 begrenzt ist. Von den Seitenkanten, die zueinander spiegelbildlich verlaufen, ist lediglich ein Abschnitt 7 zu erkennen, der an einem Eckbereich 8 in die Fensteroberkante 6 übergeht.

Die Breite des Heckfensters 5 ist auf der Höhe der Gürtellinie der Karosserie größer als im Bereich der Fensteroberkante 6. Im Abstand vor der C-Säule 3 befindet sich eine B-Säule 9, an die in bekannter Weise eine hintere rechte Seitentür 11 anscharniert ist. Die rechte hintere Seitentür 11 enthält einen Fensterausschnitt 12, der durch eine vertikale Strebe 13 in einen im Wesentlichen viereckigen Abschnitt 14 und einen etwa dreieckigen Abschnitt 15 aufgeteilt ist.

Zu dem Innenraum gehört ferner eine Rücksitzbank 15 mit einer Rücksitzfläche 16 und einer Rücksitzlehne 17. Die Rücksitzfläche 17 liegt auf einer Bodengruppe 18 auf.

Zwischen der hinteren Oberkante der Rücksitzlehne 17 und dem Heckfenster 5 erstreckt sich eine Hutablage 19.

Das Heckfenster 5 ist mit einem Heckfensterrollo 21 versehen, von dem lediglich in Fig. 1 eine Rollobahn 22 zu erkennen ist. Weitere Rollos befinden sich bei dem Seitenfenster 12, und zwar in dem viereckigen Fensterabschnitt 14 eine Rollobahn 22 und in dem dreieckigen Abschnitt 15 eine Rollbahn 24.

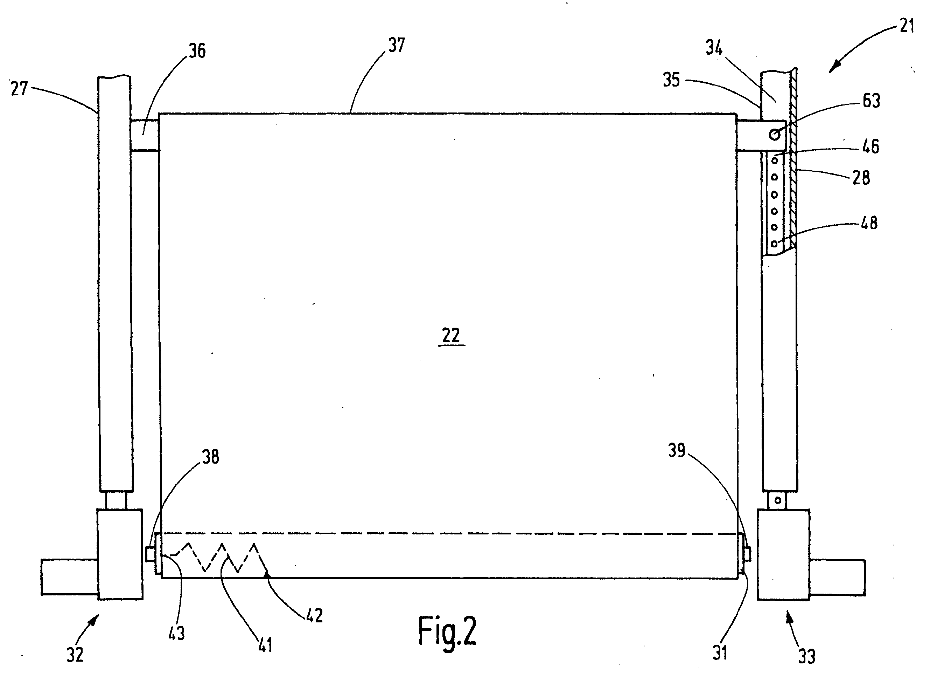

Fig. 2 zeigt in einer stark schematisierten Ansicht den Aufbau des Heckfensterrollos 21. Wie zu erkennen ist, gehören zu dem Heckfensterrollo 21 zwei zueinander spiegelbildliche Führungsschienen 27 und 28, die Rollobahn 22 sowie eine Wickelwelle 31 und zwei Antriebsvorrichtungen 32 und 33. Die beiden Führungsschienen 27 und 28 laufen seitlich des Heckfensters 5, etwa parallel zueinander. Sie sind in einer Ebene gekrümmt, wobei die Krümmungsebene parallel zu der Zeichenebene von Fig. 2 auf der Innenseite des Heckfensters 5 liegt.

Da die beiden Führungsschienen 27, 28 zueinander spiegelbildlich sind, genügt die Erläuterung einer der beiden. Wie zu erkennen ist, enthält die Führungsschiene 28 eine hinterschneidungsfreie Führungsnut 34, die sich mit einem Nutenschlitz 35 in Richtung auf die gegenüberliegende Führungsschiene 27 öffnet. Die Führungsschienen 27, 28 dienen der Führung eines Zugstabs 36, der endseitig in die Nuten 34 der beiden Führungsschienen 27, 28 eintaucht. Die Verbindung des Zugstabs 36 mit der Rollobahn 22 geschieht, indem an deren Vorderkante eine schlauchförmige Schlaufe 37 ausgebildet ist, durch die der Zugstab 36 hindurch führt. Der Zugstab 36 ist im vorliegenden Beispiel ein einfacher flachkantiger Metallstab. Die Weite der Führungsnut 34 entspricht der über die Flachseiten gemessenen Dicke des Zugstabs 36.

Das von dem Zugstab 36 abliegende Ende der Rollobahn 22, deren Zuschnitt etwa rechteckig ist und der Größe des Heckfensters 5 entspricht, ist auf der Wickelwelle 31 festgelegt. Die Wickelwelle 31 ist mit Lagerzapfen 38, 39 unterhalb der Hutablage 19 drehbar gelagert. Sie ist rohrförmig und enthält im Inneren einen Federmotor 41, der bei 42 an der Wickelwelle 31 befestigt und mit seinem anderen Ende 43 mit dem drehfesten Lagerzapfen 38 verbunden ist. Mit Hilfe des Federmotors 41 wird die Wickelwelle 31 im Sinne eines Aufwickelns der Rollobahn 22 auf die Wickelwelle 31 vorgespannt.

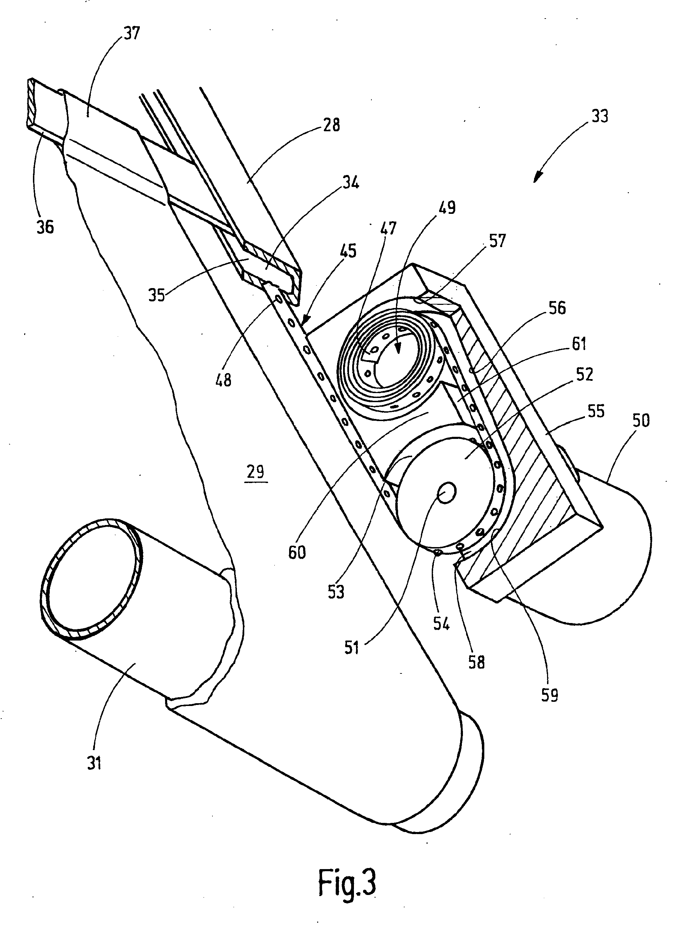

Zur Erläuterung der beiden Antriebseinrichtungen 32, 33 wird nunmehr zusätzlich auf Fig. 3 Bezug genommen.

Zu der Antriebsanordnung 33 gehört ein als Federstahlband ausgeführtes Lochband 45 mit Enden 46 und 47, das in Längsrichtung mit einer Lochung aus gleichmäßig voneinander beabstandeten Löchern 48 versehen ist. Die Löcher 48 sind Rundlöcher.

Das Federstahlband 45 ist vorgeformt, und zwar so, dass es im entspannten Zustand eine Spirale 49 bildet, wie sie der Fig. 3 zu entnehmen ist. Innerhalb der Spirale 49 liegen die einzelnen Lagen der so gebildeten Spiralfeder dicht aufeinander. Das Ende 47 befindet sich innerhalb der Spirale 49.

Darüber hinaus kann das Federstahlband 45 bezüglich einer Krümmungsachse, die zur Längserstreckung des Federstahlbands 45 parallel liegt, geringfügig gekrümmt vorgeformt sein. Die Krümmung verschwindet dort wo das Federstahlband 45 zur Spirale gewickelt ist; die konkave Seite würde der Spirale 49 zugekehrt sein.

Der Antrieb des Lochbands 45 geschieht mittels eines Getriebemotors 50, auf dessen Ausgangswelle 51 drehfest ein Antriebszahnrad 52 sitzt. Das Antriebszahnrad 52 ist im Grunde genommen eine zylindrische Scheibe, an deren Außenumfangsfläche 53 äquidistant verteilte Fortsätze 54 vorstehen. Die Fortsätze 54 haben die Gestalt von Kugelkalotten, Kegelstümpfen oder spitzen Kegeln. Ihr Abstand längs dem Umfang 53 des Antriebszahnrads 52 entspricht der Teilung der Löcher 48.

Der Getriebemotor 50 ist an ein Gehäuse 55 angeflanscht, das einen in spezieller Weise ausgestalteten Innenraum 56 aufweist. Der Innenraum 56 bildet an dem der Führungsschiene 28 benachbarten Ende eine etwa zylindrische Kammer 57 zur Aufnahme der Spirale 47. Am gegenüberliegenden Ende bildet der Innenraum 56 eine weitere etwa zylindrische Kammer 58, die von einer teilzylindrischen Innenwand 59 begrenzt ist. In der Kammer 58 dreht sich das Antriebszahnrad 52. Die Achse des Antriebszahnrads 51 ist zu der Achse der Spirale 57 achsparallel ausgerichtet und von dieser entsprechend durch einen Gehäusesteg 60 beabstandet, de an einer Oberseite 61 endet.

Die Kammer 58 ist zur Unterseite, d.h. in Richtung vom Betrachter weg geöffnet, so dass hier das Lochband 45 austreten kann. Wie Fig. 3 erkennen lässt, liegt die Spirale 49 in der Kammer 57. Von hier aus führt die außen befindliche Lage des Lochbandes 45 über die Oberseite 61 des Stegs 60 zu dem Antriebszahnrad 52. Das Lochband 45 umschlingt das Antriebszahnrad 52 in der Kammer 58 um etwa 180°. Es tritt an der Unterseite des Gehäuses 55 aus und führt von dort in den Nutenschlitz 34 der Führungsschiene 28.

Die Kammerwand 59 verläuft im Bereich dort, wo das Federstahlband 45 das Antriebszahnrad 52 umschlingt mit einem geringen radialen Abstand um die Umfangsfläche 53 des Antriebszahnrads 52 herum. Der Abstand der Kammerwand 59 von der Außenumfangsfläche 53 ist kleiner als es der Höhe der Fortsätze 54 entspricht. Um Platz für die Fortsätze 54 zu schaffen, erstreckt sich in Umfangsrichtung des Antriebszahnrads 52 längs der Kammerwand 59 eine entsprechende Nut, die wegen der Schnittdarstellung weggeschnitten ist. Die Kammerwand 59 wirkt somit als Anpressmittel, das dazu vorgesehen ist auch bei Druckbelastung die Löcher 48 mit den Fortsätzen 54 in Eingriff zu halten, d.h. zu verhindern, dass bei Druckbelastung das Federstahlband 45 soweit von der Außenumfangsfläche 58 abgehoben werden kann, dass die Fortsätze 54 aus den Löchern 48 freikommen können.

Das aktive freie Ende 46 des Federstahlbandes 45 ist, wie Fig. 2 erkennen lässt, mittels eines Niets 63 mit dem in der Führungsnut 34 befindlichen Ende des Zugstabs 36 zug- und druckfest verbunden.

Wie die Figur ferner erkennen lässt, liegen die Flachseiten des Federstahlbandes 45 parallel zu den Flachseiten der hinterschneidungsfreien Führungsnut 34.

Die Antriebsanordnung 32 ist spiegelbildlich zu der Antriebsanordnung 33 und befindet sich am Fußende der Führungsschiene 27, d.h. unterhalb der Hutablage 19.

Soweit die geometrische Zuordnung der einzelnen Teile nicht bereits beschrieben ist, ergibt sie sich aus der nachfolgenden Funktionsbeschreibung und der Zeichnung.

Zur Erläuterung der Funktion sei angenommen, dass die Rollobahn 22 vollständig auf der Wickelwelle 31 aufgewickelt ist, d.h. die Kante mit dem Zugstab 36 befindet sich in dem Schlitz der Hutablage 19. In diesem Zustand ist das Federstahlband 45 maximal in der Kammer 57 aufgewickelt. Der Außendurchmesser, den die Spirale 47 dort bildet ist kleiner als der Durchmesser der Kammer 57. Zufolge der spiraligen Vorformung des Federstahlbandes 45 liegt die Spirale 47 nur in der Nachbarschaft jenes Bereiches, an dem das Federstahlband 45 von der Spirale 49 abgezogen wird, an der Wand der Kammer 57, nämlich dem Steg 60 an. Auf Grund der Eigenelastizität ist das Federstahlband ständig bestrebt sich von dem Ende 47 her einzurollen und die Spirale 48 drückt deswegen in der Nähe der Oberseite 61 ständig gegen den Steg 60, an dem die Spirale 49 anliegt.

Das Federstahlband 45 führt aus der Kammer 57 durch einen nach unten von der Oberseite des Stegs 61 begrenzten Schlitz in die Kammer 58 und wird dort von der Kammerwand 59 in jedem Falle an die Außenumfangsfläche 52 des Antriebsrads 51 anliegend gehalten.

Das Federstahlband 45 führt von hier neben der Unterseite in die Führungsschiene 28 hinein. In dem Bereich zwischen der Führungsschiene 28 und der Unterseite des Gehäuses kann das Federstahlband 45 noch zusätzlich geführt werden. Die hierzu erforderlichen Führungsmittel sind aus der Darstellung von Fig. 3 weggelassen um das Federstahlband 45 besser erkennen zu können.

Wenn der Benutzer ausgehend von der gezeigten Stellung das Rollo 21 ausfahren will, betätigt er einen entsprechenden Schalter im Fahrzeug, wodurch die beiden Getriebemotoren 50 der beiden Antriebsanordnungen 32 und 33 gleichzeitig und gegensinnig in Umdrehungen versetzt werden. Für die in Fig. 3 gezeigter Antriebsanordnung 33 bedeutet dies, dass das Antriebszahnrad 52 im Uhrzeigersinne in Umdrehungen versetzt wird. Das Antriebszahnrad 52 zieht wegen des formschlüssigen Eingreifens der Fortsätze 54 in die Löcher 48 das Federstahlband 45 von der Spirale 49 ab und schiebt es in die Führungsschiene 28 vor. Da das Federstahlband 45 bezüglich der Flachseiten ausknicksicher geführt ist, schiebt es den Zugstab 36 gegen die Wirkung des Federmotors 41 vor sich her. Aufgrund der Geometrie des Federstahlbands 45 kann es seitlich über die Schmalseite nicht zu dem Nutenschlitz 35 hin austreten.

Da beide Getriebemotoren 48 mit derselben Drehzahl laufen, schieben sie gleichmäßig den Zugstab 36 vor sich her, der parallel zu der Wickelwelle 31 zu dem distalen Ende der beiden Führungsschienen 26 und 27 bewegt wird. Das distale Ende der beiden Führungsschienen 26, 27 liegt an der Oberseite des Heckfensters 5, d. h. nahe dem Dach.

Bei der Ausfahrbewegung wird von dem Federstahlband 45 eine Schubkraft ausgeübt, die an sich bestrebt ist, das Federstahlband 45 über die Flachseite ausknicken zu lassen. Dieses Ausknicken wird dadurch verhindert, dass das Federstrahlband 45 unter Ausbildung einer teilzylindrischen Rinne in Längsrichtung konkav vorgeformt ist in Verbindung mit den Begrenzungsflächen oder -seiten der Führungsnut 34. Es ist also auf diese Weise ohne weiteres möglich die erforderliche Schubkraft zu erzeugen, um die Rollobahn 22 von der Wickelwelle 31 abzuziehen.

Bei voll ausgefahrenem Rollo 21 verbleibt ein kleiner Rest von zwei oder drei Gängen an Spirale 49 in der Kammer 57, um das Wiederaufrollen der Spirale 49 zu erleichtern.

Zum Einfahren der Rollobahn 22 werden die Getriebemotoren 48 mit der entgegengesetzten Drehrichtung eingeschaltet. Für die Antriebsanordnung 33 bedeutet dies, dass jetzt das Antriebszahnrad 52 im Gegenuhrzeigersinne läuft. Bei dieser Bewegung wird das Arbeitstrum des Federstahlbands 45 aus der Führungsschiene 28 in Richtung auf das Antriebszahnrad 52 zurückgezogen. Dieser synchronen Rückbewegung der beiden Federstahlbänder 45 der beiden Antriebsanordnungen 32 und 33 folgt die entsprechende Kante der Rollobahn 22. In dem Maße, in dem der Zugstab 36 in Richtung auf die Wickelwelle 31 bewegt wird, wickelt der Federmotor 41 die Rollobahn 22 auf der Wickelwelle 31 auf. Sie bleibt während der gesamten Bewegungszeit permanent gespannt.

Das Leertrum des Federstahlbands 45 wird nach dem Ablaufen von der Außenumfangsfläche 53 durch den über den Steg 61 gebildeten Schlitz in die Kammer 57 zurückgeschoben. Dort wickelt sich das Federstahlband 45 freiwillig wieder zu der im Durchmesser zunehmenden Spirale 49 auf. Zum Aufwickeln auf die Spirale 49 ist keine Antriebsleistung erforderlich. Das Aufwickeln auf die Spirale 49 bzw. zur Spirale 49, erfolgt allein aufgrund der ähnlich einer Uhrwerksfeder vorgeformten Gestalt des Federstahlbands 45. Würde das Federstahlband 45 der Antriebsanordnung 33 frei auf dem Tisch liegen, würde es, auch nachdem es einmal vollständig gestreckt wäre, aufgrund der Vorformung freiwillig wieder die Spiralstruktur einnehmen.

Wie Fig. 3 unschwer für den Fachmann erkennen lässt, können die Antriebsanordnung 32, 33 nicht nur im Bereich des Fußendes der Führungsschienen 27 bzw. 28 angeordnet sein. Sie können auch an dem von der Wickelwelle 31 abliegenden Ende der Führungsschienen 27, 28 angebracht sein. Dies bedeutet, dass zum Ausfahren der Rollobahn 29 das Federstahlband 45 einen Zug auf den Zugstab 36 und keinen Druck ausübt.

Welche Anordnung die jeweils günstigere ist, ergibt sich aus den Platzverhältnissen innerhalb der Karosserie.

Es ist ferner zu erkennen, dass diese Art von Antrieb, wie sie in Verbindung mit dem Heckfenster beschrieben und erläutert ist, auch bei Dachfensterrollos eingesetzt werden kann.

Es ist ferner zu erkennen, dass das Federstahlband 45 nicht, wie gezeigt, mit den Flachseiten parallel zur Ebene der Rollobahn angeordnet zu sein braucht, sondern auch senkrecht dazu positioniert sein kann. In diesem Falle wird zweckmäßigerweise eine hinterschnittene Führungsnut 34 verwendet, wie dies weiter unten noch beschrieben wird.

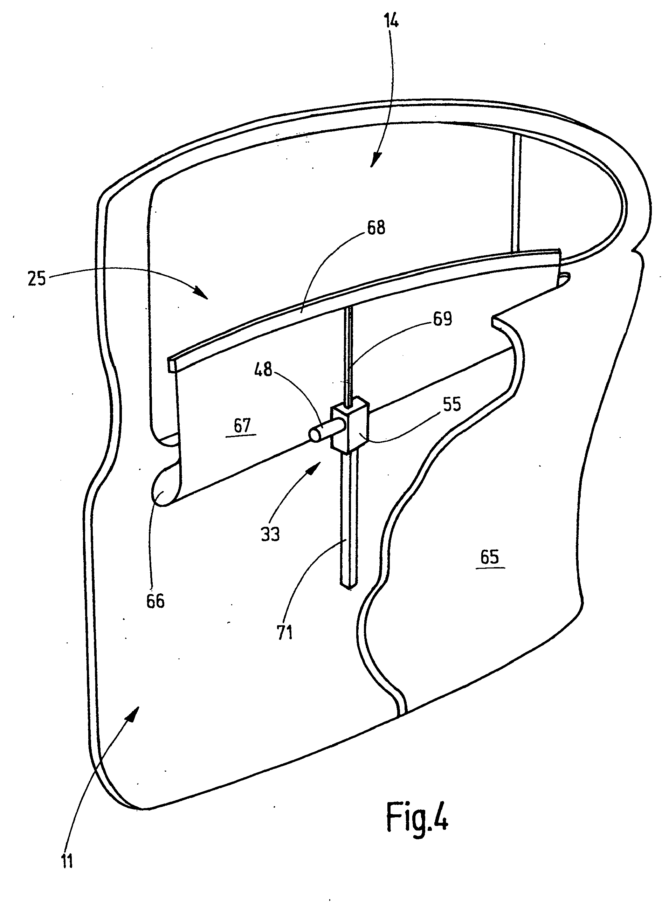

Das Seitenfensterrollo 25 verwendet dieselbe Antriebsanordnung 33, wie sie zuvor ausführlich erläutert ist, jedoch in Verbindung mit einer anderen Führungseinrichtung. Fig. 4 zeigt in einer Einzeldarstellung perspektivisch die Seitentür 11 mit teilweiser geöffneter Innenverkleidung 65.

Zu dem Seitenfensterrollo 25 gehört eine in der Tür gelagerte Wickelwelle 66, an der mit einer Kante eine Rollobahn 67 befestigt ist. Das freie Ende der Rollobahn 67 ist mit einem Zugstab 68 verbunden, der funktionsmäßig dem Zugstab 36 aus dem vorherigen Ausführungsbeispiel entspricht.

Abweichend von dem vorherigen Ausführungsbeispiel wird der Zugstab 68 nicht durch Führungsschienen 27 oder 28 geführt, sondern durch einen Tragstab 69. Der Tragstab 69 ist ein gerader Stab, der etwa rechtwinklig zu der Unterkante des Fensters 14 verläuft und in das Türinnere eintaucht.

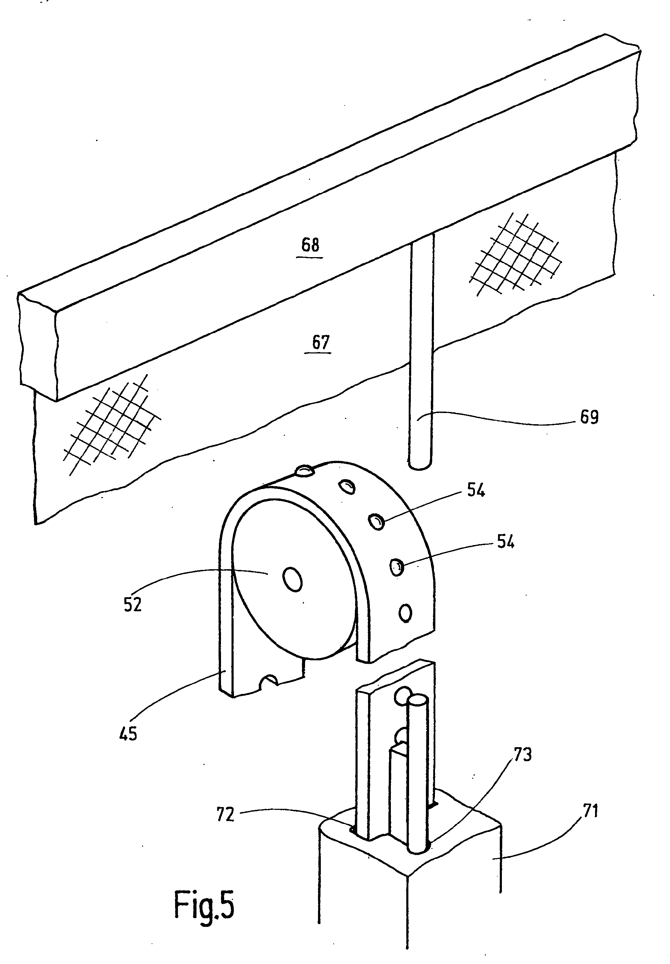

Zum Bewegen des Tragstabs 69 ist eine Antriebseinrichtung 33 vorgesehen, wie sie zuvor ausführlich erläutert ist. Unterhalb des Gehäuses 55 der Antriebseinrichtung 33 erstreckt sich ein Führungsrohr 71, das, wie Fig. 5 erkennen lässt, eine hinterschnittene Führungsnut 72 enthält. Seitlich neben der Führungsnut 72 befindet sich eine weitere sich in die Führungsnut 72 öffnende Nut 73, in der der Tragstab 69 gleitend spielarm aufgenommen ist. Die Führungsnut 72 dient der knicksicheren Führung des Federstahlbands 45.

In Fig. 5 ist von der Antriebseinrichtung 33 lediglich das Federstahlband 45 und das Antriebszahnrad 52 gezeigt. Das Gehäuse 55 mit der Kammer 57 und der dort befindlichen Federbandspirale 49, wie sie in Fig. 3 gezeigt und ausführlich erläutert ist, ist auch bei der Antriebsanordnung 33 gemäß Fig. 4 vorhanden, jedoch in Fig. 5 nicht dargestellt.

Das Arbeitstrum des Federstahlbands 45 läuft in der hinterschnittenen Nut 72, wobei das Antriebsende 46 mit dem unteren Ende des Tragstabs 69 im Wesentlichen starr verbunden ist.

Die Funktionsweise ist wie folgt:

Bei eingefahrenem Rollo befindet sich der Zugstab 68 auf der Höhe der Fensterunterkante. Der Tragstab 69 taucht maximal in das Führungsrohr 71 ein und schaut dementsprechend nur ein kleines Stück über die Oberkante des Gehäuses 55 über. Dementsprechend hat das Arbeitstrum des Federstahlbands 45 in dem Führungsrohr 71 seine größte Länge. Es bleibt wie zuvor ein Rest an Spirale 49 in der Kammer 57.

Wenn der Benutzer an dem Seitenfenster eine Abschattung wünscht, setzt er den zugehörigen Antriebsmotor 50 in Gang, wodurch über die formschlüssige Kupplung des Federstahlbands 45 mit dem Antriebszahnrad 52 das Arbeitstrum des Federstahlbands 45 aus dem Führungsrohr 71 herausgezogen wird. Dadurch bewegt sich der Tragstab 69, der mit dem Ende 46 des Arbeitstrums fest verbunden ist, nach oben in Richtung auf die Oberkante des Fensters 14.

Bei dieser Transportbewegung des Federstahlbands 45 wird das Leertrum in der zuvor ausführlich erläuterten Weise in dem Gehäuse 55, genauer gesagt in der dort vorhandenen Kammer 47, zur Spirale aufgewickelt. Das Federstahlband 45 ist auch bei dem Ausführungsbeispiel nach den Fig. 4 und 5 spiralig vorgeformt, so dass es bestrebt ist, die spiralige Konformation gemäß Fig. 3 einzunehmen, wenn von außen auf das Federstahlband 45 kein Zwang ausgeübt wird.

Das Herausziehen des Federstahlbands 45 aus dem Führungsrohr 71 erfolgt so lange bis der Zugstab 68 im Bereich der Fensteroberkante zu liegen kommt. In dieser Stellung blockiert die Antriebsanordnung 33 weil beispielsweise ein Anschlag an dem Federstahlband 45 oder dem Zugstab 43 die weitere Ausfahrbewegung des Tragstabs 69 aus dem Führungsrohr 71 blockiert.

Bei dem gezeigten Ausführungsbeispiel ist die Antriebsanordnung 33 in der Nähe der Fensterunterkante, d.h. am oberen Ende des Führungsrohrs 71, angeordnet. Zum Ausfahren der Rollobahn 67 erzeugt das Federstahlband 45 eine Zugkraft, während zum Einfahren das Arbeitstrum des Federstahlbands 45 auf Druck belastet wird. Das Einfahren geschieht sinngemäß in der umgekehrten Richtung, indem das Federstahlband 45 in den Führungskanal 72 vorgeschoben wird. Dabei bewegt das Federstahlband 45 den Tragstab 69 zurück in das Führungsrohr 71.

Bei dem in den Fig. gezeigten Ausführungsbeispielen beträgt der Umschlingungswinkel des Antriebsrads 52 fast 180°. Wie unschwer zu erkennen ist, kann der Umschlingungswinkel drastisch verringert werden. Ohne zeichnerische Darstellung ist verständlich, dass beispielsweise der Umschlingungswinkel soweit reduziert werden kann, bis nur noch maximal zwei Fortsätze 53 gleichzeitig mit dem Federstahlband 45 in Eingriff stehen. Das bedeutet, dass das Federstahlband 45 praktisch nur noch tangential an dem Antriebszahnrad 52 vorbei läuft und nahezu keine Umschlingung stattfindet. Durch geeignete voneinander beabstandete Anschläge kann dennoch das Federstahlband 45 mit der Außenumfangsfläche 53 des Antriebszahnrads 52 in Anlage gehalten werden. Mit Hilfe einer solch geringen Anzahl von gleichzeitig in Eingriff stehenden Fortsätzen 54 ist es möglich, einen Überlastungsschutz zu realisieren, wenn gleichzeitig die Fortsätze 54 eine verhältnismäßig geringe Höhe aufweisen. In Verbindung mit schrägen Flanken der Fortsätze 54, wenn diese, wie gezeigt, kegelstumpfförmig oder kalottenförmig gestaltet sind, kann erreicht werden, dass die Fortsätze 54 aus den Löchern 48 außer Eingriff kommen, wenn die Haltekraft für das Federstahlband 45 einen vorbestimmten Grenzwert überschreitet. Auf diese Weise ist ein wirksamer Einklemmschutz mit Hilfe der neuen Antriebsanordnung zu erreichen.

Es ist ferner verständlich, dass die Lochung nicht in Form von Rundlöcher auf der Längsachse des Federstahlbands ausgeführt sein muss. Die Lochung kann auch als Randlochung ausgeführt sein. In diesem Falle sind ein oder beide Ränder des Federstahlbands mit rechteckigen Ausklinkungen versehen, die randseitig offen sind.

Eine Antriebsanordnung für Fensterrollos von Kraftfahrzeugen weist ein Gehäuse auf, das eine Kammer zur Unterbringung eines Federstahlbandes enthält, das, ähnlich einer Uhrwerksfeder, spiralförmig vorgeformt ist. Das Federstahlband ist in Längsrichtung äquidistant gelocht und läuft nach dem Verlassen der Kammer über einen durch einen Getriebemotor angetriebenes Antriebszahnrad, das nach Art eines Stacheldrahts ausgebildet ist, dessen Fortsätze in die Löcher des Federstahlbands eingreifen. Mit Hilfe des Federstahlbands kann eine Zug- oder Druckkraft zum Bewegen der Rollobahn erzeugt werden.

## Patentansprüche

1. Antriebsanordnung (32,33) für Fensterrollos (21,25) von Kraftfahrzeugen, bei denen die Fensterrollos (21,25) eine bewegbare oder aufrollbare Rollobahn (22,67) aufweisen, deren Kante, die beim Öffnen oder Schließen den größten Weg zurücklegt durch die Antriebsanordnung (32,33) kraftangetrieben ist, wobei die Antriebsanordnung (32,33) aufweist:
ein Federstahlband (45), das in Längsrichtung mit einer Lochung aus äquidistant verteilten Löchern (48) oder Ausnehmungen versehen ist und das vorgeformt ist, derart, dass es im entspannten Zustand eine Spiralfeder (49) bildet, bei der die Federlagen einander benachbart sind, wobei das in der Spirale (49) liegende Ende (47) des Federstahlbands (45) das funktionslose Ende und das außen liegende Ende (46) des Federstahlbands (45) das Antriebsende bildet, das mittelbar oder unmittelbar auf die Rollobahn (22,67) einwirkt,
ein Antriebszahnrad (52), das auf seinem Außenumfang (53) mit einer Anzahl von Fortsätzen (54) versehen ist, die zum formschlüssigen Eingreifen in die Lochung (48) des Federstahlbands (45) vorgesehen sind,
einen Getriebemotor (50), dessen Ausgangswelle (51) mit dem Antriebszahnrad (52) drehfest gekuppelt ist, und
Mittel (59) um das Federstahlband (45) mit dem Antriebszahnrad (52) in Eingriff zu halten.

2. Antriebsanordnung nach Anspruch 1, **dadurch gekennzeichnet, dass** die Federlagen unmittelbar aufeinander liegen.

3. Antriebsanordnung nach Anspruch 1, **dadurch gekennzeichnet, dass** das Federstahlband (45) bezüglich der Längsachse gekrümmt ist.

4. Antriebsanordnung nach Anspruch 1, **dadurch gekennzeichnet, dass** sie derart mit der Rollobahn (22,67) gekuppelt ist, dass das Federstahlband (45) beim Ausfahren der Rollobahn (22,67) auf Zug belastet wird.

5. Antriebsanordnung nach Anspruch 1, **dadurch gekennzeichnet, dass** sie derart mit der Rollobahn (22,67) gekuppelt ist, dass das Federstahlband (45) beim Ausfahren der Rollobahn (22,67) auf Druck belastet wird.

6. Antriebsanordnung nach Anspruch 1, **dadurch gekennzeichnet, dass** Führungsmittel (27,28,71) für das Federstahlband (45) vorhanden sind, die das Federstahlband (45) bei Druckbelastung ausknicksicher führen.

7. Antriebsanordnung nach Anspruch 6, **dadurch gekennzeichnet, dass** zu den Führungsmitteln (27,28,71) eine Führungsschiene gehört.

8. Antriebsanordnung nach Anspruch 7, **dadurch gekennzeichnet, dass** die Führungsschiene (27,28) eine hinterschneidungsfreie Führungsnut (34) aufweist, wobei eine Schmalseite des Federstahlbands (45) in Richtung auf den Nutenschlitz (35) zeigt.

9. Antriebsanordnung nach Anspruch 7, **dadurch gekennzeichnet, dass** die Führungsschiene (71) eine hinterschnittene Führungsnut (72) aufweist, wobei eine Flachseite des Federstahlbands (45) in Richtung auf den Nutenschlitz zeigt.

10. Antriebsanordnung nach Anspruch 1, **dadurch gekennzeichnet, dass** sie ein Seil aufweist, das das Antriebsende (46) des Federstahlbands (45) mit der Rollobahn (22,67) kuppelt.

11. Antriebsanordnung nach Anspruch 1, **dadurch gekennzeichnet, dass** sie ein Gehäuse (55) aufweist, an dem der Getriebemotor (50) befestigt ist und das die Mittel (59) enthält um das Federstahlband (45) mit dem Antriebszahnrad (42) in Eingriff zu halten.

12. Antriebsanordnung nach Anspruch 1, **dadurch gekennzeichnet, dass** die Mittel (59), die das Federstahlband (45) mit dem Antriebszahnrad (43) in Eingriff halten, derart gestaltet sind, das bei einer Überlastung die Fortsätze (54) aus der Lochung (48) des Federstahlbands (45) herausspringen.

13. Antriebsanordnung nach Anspruch 1, **dadurch gekennzeichnet, dass** die Mittel (59), die das Federstahlband (45) mit dem Antriebszahnrad (42) in Eingriff halten, auf die Flachseite des Federstahlbands (45) an Stellen einwirken, die bezogen auf die Laufrichtung des Federstahlbands (45) beidseits der Kontaktstelle zwischen dem Antriebszahnrad (42) und dem Federstahlband (45) liegen.

14. Antriebsanordnung nach Anspruch 1, **dadurch gekennzeichnet, dass** die Fortsätze (43) kalottenförmig, kegelförmig oder kegelsttumpfförmig sind.

15. Antriebsanordnung nach Anspruch 1, **dadurch gekennzeichnet, dass** die Höhe der Fortsätze (43) das 0,8- bis 1,5-fache der Dicke des Federstahlbands (45) beträgt.

16. Fensterrollo (21,25), **dadurch gekennzeichnet, dass** es eine Antriebsanordnung (32,33) nach einem oder mehreren der Ansprüche 1 bis 15 aufweist.

17. Fensterrollo nach Anspruch 16, **dadurch gekennzeichnet, dass** der Rollobahn (22,67) ein Zugstab (36,68) zugeordnet ist.

18. Fensterrollo nach Anspruch 17, **dadurch gekennzeichnet, dass** der Zugstab (36) wenigstens einends in einer Führungsschiene (27,28) geführt ist.

19. Fensterrollo nach Anspruch 17, **dadurch gekennzeichnet, dass** der Zugstab (36) beidends in Führungsschienen (27,28) geführt ist und dass jeder Führungsschiene (27,28) eine Antriebsanordnung (32,33) nach einem oder mehreren der Ansprüche 1 bis 15 zugeordnet ist.

20. Fensterrollo nach Anspruch 16, **dadurch gekennzeichnet, dass** wenigstens ein Tragstab (69) vorgesehen ist, dem eine Führungsanordnung (71) zugeordnet ist, die den Tragstab (69) in Richtung parallel zur Ausfahrbewegung der Rollobahn (67) führt.

21. Fensterrollo nach Anspruch 16, **dadurch gekennzeichnet, dass** der Tragstab (69) biegeelastisch ist.

22. Fensterrollo nach Anspruch 16, **dadurch gekennzeichnet, dass** das untere Ende des Tragstabs (69) mit dem Federstahlband (45) gekuppelt ist.

23. Fensterrollo nach Anspruch 22, **dadurch gekennzeichnet, dass** hierzu eine Antriebsanordnung (32,33) nach einem oder mehreren der Ansprüche 1 bis 15 gehört.

24. Fensterrollo nach Anspruch 22, **dadurch gekennzeichnet, dass** die Antriebsanordnung (32,33) nach einem oder mehreren der Ansprüche 1 bis 15 in der Nähe jener Stelle angeordnet ist, in der sich das von dem Zugstab (68) abliegende Ende des Tragstabs (69) in der ausgefahrenen Stellung befindet.

25. Fensterrollo nach Anspruch 22, **dadurch gekennzeichnet, dass** die Antriebsanordnung (32,33) nach einem oder mehreren der Ansprüche 1 bis 15 in der Nähe jener Stelle angeordnet ist, in der sich das von dem Zugstab (68) abliegende Ende des Tragstabs (69) in der eingefahrenen Stellung befindet.
